# EUROPEAN PATENT SPECIFICATION

(11) **EP 1 116 303 B1**
(45) Date of publication and mention of the grant of the patent: **12.04.2006**
(21) Application number: 99969539.8
(22) Date of filing: 16.09.1999
(51) Int. Cl.: H01R 13/24, G06K 7/00

(54) **ELECTRICAL CONNECTOR FOR A SMART CARD, WHICH INCLUDES A BLADE-TYPE SWITCH FOR DETECTING THE PRESENCE OF A CARD**
ELEKTRISCHER VERBINDER FÜR EINE SPEICHERKARTE MIT EINEM BLATTKONTAKTSCHALTER ZUR ERKENNUNG DER ANWESENHEIT EINER KARTE
CONNECTEUR ELECTRIQUE POUR CARTE INTELLIGENTE COMPORTANT UN COMMUTATEUR DE TYPE LAMELLE POUR DETECTER LA PRESENCE D'UNE CARTE

(30) Priority: 22.09.1998 FR 9811788
(43) Date of publication of application: 18.07.2001
(73) Proprietor: ITT MANUFACTURING ENTERPRISES, INC., Wilmington, Delaware 19801 (US)
(72) Inventor: BRICAUD, Hervé, F-39100 Dole (FR); PIZARD, Yves, F-39100 Dole (FR)
(74) Representative: Kohn, Philippe
(86) International application number: PCT/EP1999/006847
(87) International publication number: WO 2000/017964

(56) References cited:
- WO-A-98/33138
- DE-A- 19 521 728
- US-A- 5 259 777

## Description

The present invention relates to an electrical connector for connecting a card having one or more integrated circuits, usually called a smart card.

The invention thus relates to a connector for connecting a smart card which has a lower plane face provided with contact pads, these pads being arranged in a standardized arrangement and being, for example, eight in number, arranged in pairs of two longitudinally aligned pads.

The connector makes it possible, in particular, to connect the card to a read/write circuit belonging to a device having especially a printed-circuit board to which the connector is fixed.

There are many embodiments of such a connector which, in general, comprises an insulating support bounded by an approximately plane upper face, from above which a series of contact ends projects vertically, each of which belongs to the free end part of an elastically deformable conducting contact blade carried by the insulating support.

Each free end part extends an intermediate part for fitting or mounting the contact blade onto the insulating support and it is able to be elastically deformed downwards, in the manner of a bending beam, by the card - more specifically by the lower face of the latter - when the latter is brought into a so-called contact position in which each contact end of an elastic contact blade bears elastically against a facing portion of the lower face of the card, especially against a corresponding contact pad when the longitudinal and transverse position of the card with respect to the insulating support is correct.

In order to ensure electrical connection to the contact pads on the card, each contact blade has another free end for connecting the connector, this other free end being, for example, electrically connected to a conducting track of a lower printed-circuit board on which the connector is mounted.

The card may be brought into its contact position by various movements depending on the type of connector and on the application in which the connector is used. The card may thus be brought into the contact position by sliding or inserting it longitudinally in a horizontal direction parallel to the general plane of the card above the upper face of the insulating support and/or by bearing on this upper face. The card may also be brought into the contact position by moving it vertically downwards with respect to the insulating support in a direction perpendicular to the general plane of the card. Finally, the card may also be brought into the contact position by pivoting it about a horizontal axis, the card being, for example, carried for this purpose by a pivoting lid mounted so as to pivot on the insulating support.

Many designs of an electrical connector of this type have already been proposed which include an electrical switch for detecting the presence of a card in the contact position. Such a switch makes it possible to make or break a switching circuit so as to deliver an electrical signal representative of a card having been inserted in or having been removed from a device that makes use of the data contained in a smart card to which the device is connected by the connector.

Certain designs make use of switches produced in the form of independent components attached to the connector or completely or partially integrated into the latter.

Other designs, which are less expensive and less bulky, provide a switch comprising a switch blade made of conducting material which is fixed to the insulating support and which has at least a first branch which extends opposite and above an upper portion of a free end part belonging to an elastically deformable blade made of conducting material which is carried by the insulating support and which has a free connection end, the first branch of the switch blade being able or unable to engage with this portion depending on whether or not a card is present in the contact position in order to make or break, or to break or make (depending on whether the switch is of the normally-open or normally-closed type) an electrical switching circuit between the connection end of the blade having the said portion and the switch blade.

An example of such a switch having a switch blade carried by the insulating support is described and illustrated in document DE-U-94/07486 which describes and illustrates a connector sold by the company ITT.

According to the design proposed in that document, the switch blade extends longitudinally and has two opposed branches, one of which permanently engages with a blade carried by the insulating support and the other of which is able to be elastically deformed in the presence of a card in order to engage with another blade carried by the insulating support in order to close the electrical switching circuit.

In this design, the two opposed and longitudinally aligned blades with which the branches of the switch blade engage are "special" blades, that is to say they are different from the contact blades of the connector which are longitudinally aligned in pairs, the pair of fixed blades with which the branches of the switch blade engage being necessarily adjacent to one of the sides of the block of contact blades of the connector.

The document according to the prior art provides only a single solution to the positioning of the switch, this arrangement according to the prior art having the drawback of requiring two fixed blades that differ in nature and in shape from those of the contact blades which in other respects are all identical, to be mounted or fitted onto the insulating support.

This difference is a major obstacle to the economic and automated production of the connector insofar as, even if blades of the "contact blade" type is used for producing them, it is necessary either to initially omit the free contact ends of these blades, in order to convert them into fixed blades associated with the switch blade, or else this omission must be made after mounting all the blades onto the insulating support and before fitting the switch blade.

Other examples of the prior art are disclosed in US-A-5.259.777 or WO-A-98.33138.

The object of the invention is to provide a connector of the type mentioned above which remedies the drawbacks mentioned and especially to avoid differently shaped contact elements or blades.

The design according to the invention must especially be applicable whatever the direction in which a smart card is inserted and it must allow the use, to a very great extent, of industrial processes and components used for the production of connectors without a blade-type switch.

To this end, the invention provides a connector characterized in that the blade having the said portion is identical to the contact blades of the connector and in that the said portion is the contact end of the said blade.

According to other characteristics of the invention:
- the switch blade has a second branch which extends opposite the contact end of another contact blade of the connector in order to make or break an electrical switching circuit between the connection ends of the two contact blades associated with the switch blade ;
- the contact ends of the contact blades of the connector are longitudinally aligned in pairs ;
- the contact ends of the said two associated contact blades belong to a pair of longitudinally aligned ends ;
- the contact ends of the said two associated contact blades do not belong to a pair of longitudinally aligned ends ;
- the second branch of the switch blade is always in electrical contact with the contact end of the associated contact blade in order to establish a permanent electrical contact point between these two elements, while the first branch of the switch blade is able or unable to engage with the contact end of the associated contact blade in order to establish or not establish another electrical contact point between these two elements ;
- the electrical switching circuit is open in the absence of a card in the contact position and is closed in the presence of a card in the contact position, and the switch blade has at least one movable branch which, in the presence of a card in the contact position, is elastically deformed in order to establish an electrical contact point with the contact end of the contact blade associated with this branch ;
- the electrical switching circuit is closed in the absence of a card in the contact position and is open in the presence of a card in the contact position, the switch blade has at least one fixed branch against which the contact end of the associated contact blade bears elastically in the absence of a card in the contact position, in order to establish an electrical contact point between these two elements, and the presence of a card in the contact position causes the said contact end to move vertically downwards in order to take the latter away from the fixed branch of the switch blade ;
- the switch blade has a fixing portion which is fixed to the upper face of the insulating support of the connector ;
- the switch blade has a plate-shaped fixing part which bears vertically against a facing portion of the upper face of the insulating support to which insulating support it is fixed by hot crimping an upper head of a fixing and positioning stud which passes through a hole in the fixing portion ;
- each contact end of a contact blade is an end having an upwardly convex domed profile ;
- when a card is present in the contact position the entire switch blade lies vertically below the plane of the upper face of the insulating support in order to avoid any risk of a short-circuit between the contact pads on the lower face of the card and parts of the switch blade.

Other characteristics and advantages of the invention will appear upon reading the detailed description which follows, for the comprehension of which reference will be made to the appended drawings in which :
- Figure 1 is a diagrammatic view from above, on a large scale which illustrates the main part of a connector for a smart card, which includes a switch for detecting the presence of a card in the contact position, of the normally-open type, having a fixed switch blade made according to the teachings of the invention, and of the type in which the switch blade engages with two contact blades of the connector in order to form two semi-permanent contact points ;
- Figure 2 is a sectional view on the line 2-2 in Figure 1 ;
- Figure 3 is a view similar to that in Figure 2, in which the connector is illustrated with a smart card in the contact position, having caused the switch to close ;
- Figure 4 is a view similar to that in Figure 1, which illustrates a first variant of the first embodiment making it possible to fulfil the switch function between any two contact blades from among the eight contact blades of the connector ;
- Figure 5 is a sectional view on the line 5-5 in Figure 4 ;
- Figures 6 and 7 are views similar to those in Figures 4 and 5, which illustrate another example of this first variant of a switch of the normally-open type ;
- Figures 8 to 10 are views similar to those in Figures 1 to 3, which illustrate a second variant of the first embodiment of a switch of the normally-open type, having a single semi-permanent contact point and one permanent contact point ;
- Figure 11 is a view similar to that in Figure 1, which illustrates a third variant of the first embodiment of a switch of the normally-open type, making use of only one of the contact blades of the connector ;
- Figure 12 is a sectional view on the line 12-12 in Figure 11 ;
- Figure 13 is a sectional view on the line 13-13 in Figure 11 ;
- Figures 14 and 15 are views similar to those in Figures 1 and 2, which illustrate a second embodiment of an electrical connector for a smart card, which includes a switch of the normally-closed type with two semi-permanent contact points ;
- Figure 16 is a detailed view which illustrates one of the contact blades of the connector before it is inserted into the insulating support ;
- Figure 17 is a view similar to that in Figure 15, in which the connector is illustrated with a smart card in the contact position ;
- Figures 18 to 21 are views similar to those in Figures 14 to 17, which illustrate a first variant of the second embodiment of the switch of the normally-closed type, comprising only one permanent contact point ;
- Figures 22 and 23 are views similar to those in Figures 14 and 15, which illustrate a second variant of the second embodiment of the switch of the normally-closed type, making use of only one of the contact blades of the connector ;
- Figure 24 is a sectional view on the line 24-24 in Figure 22 ; and
- Figure 25 is a diagram which illustrates the standardized arrangement of the contact pads on a MICROSIM card.

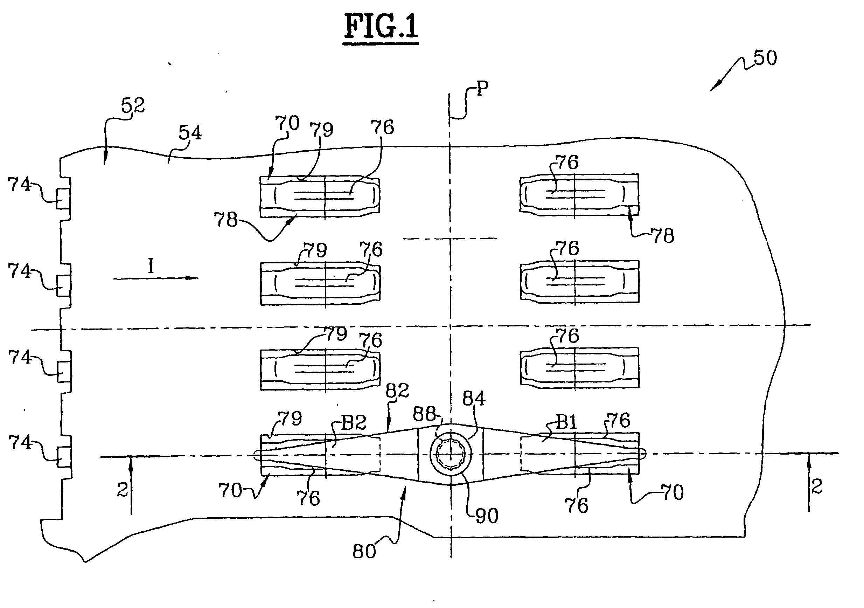

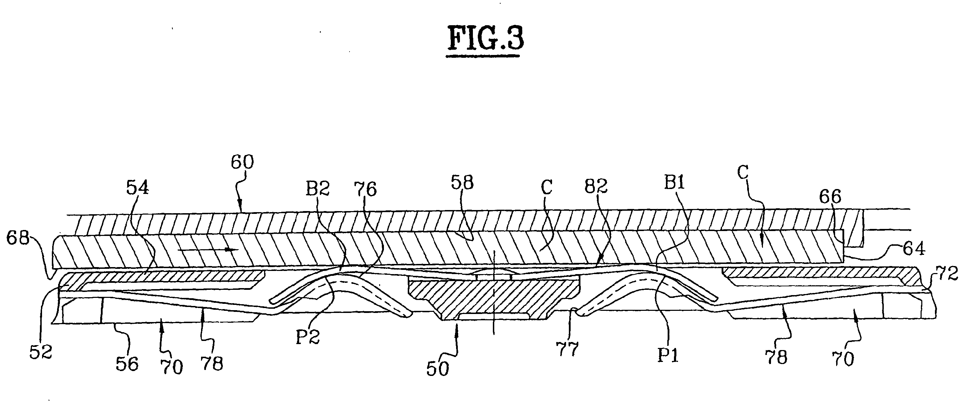

Figures 1 to 4 show an electrical connector 50 for connecting a smart card C (see Figure 3). The connector 50 consists essentially of a generally plate-shaped support 52 made of insulating material which is bounded by an approximately plane horizontal upper face 54 and by a parallel and opposed lower face 56 which is, for example, designed to bear vertically against the facing upper face of a printed-circuit board (not shown) belonging to the device which is equipped with the connector 50.

In the example illustrated in the figures, the upper face 54 of the insulating support 52 extends opposite the parallel lower face 58 belonging to a plate-shaped element 60 of the device which is equipped with the connector 50, this lower face 58 with the upper face 54 defining a slot 62 for longitudinal insertion of the card C in a direction I parallel to the general plane of the card and to the faces 54 and 58.

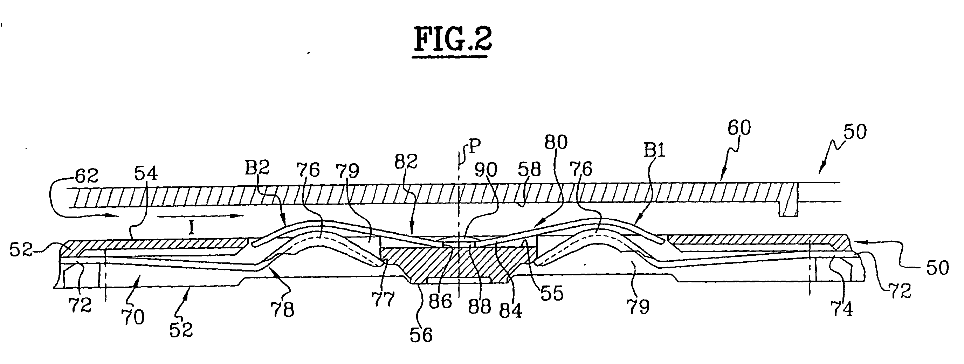

The card C may thus be inserted here from the rear forwards, that is to say from the left-hand side to the righthand side in Figures 2 and 3, into the slot 62, the longitudinal positioning of the card in its contact position illustrated in Figure 3 being, for example, determined by the front transverse edge 64 of the card butting against a corresponding stop 66 belonging to the element 60.

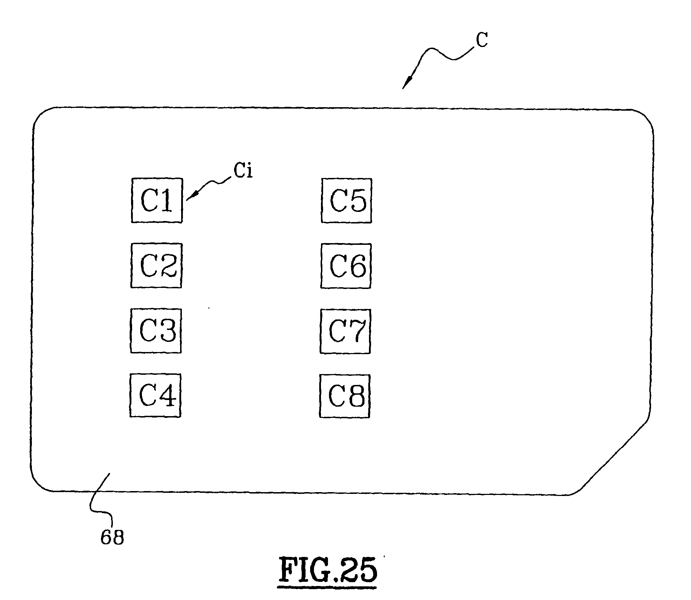

According to a known design, the lower horizontal main face 68 of the card C includes contact pads Ci (see Figure 25) for connecting the integrated circuit(s) contained in the card to a read/write circuit (not shown) via the connector 50.

When the card is in its contact position illustrated in Figure 3, that part of its lower face 68 having the contact pads lies vertically opposite the main part of the connector illustrated in Figure 1, which has a general design symmetry with respect to a vertical and transverse mid-plane P.

According to a known design, this main part has contact blades 70 each made of an elastically deformable conducting material.

Each blade 70 has an intermediate part 72 for mounting it in and fixing it to the insulating support.

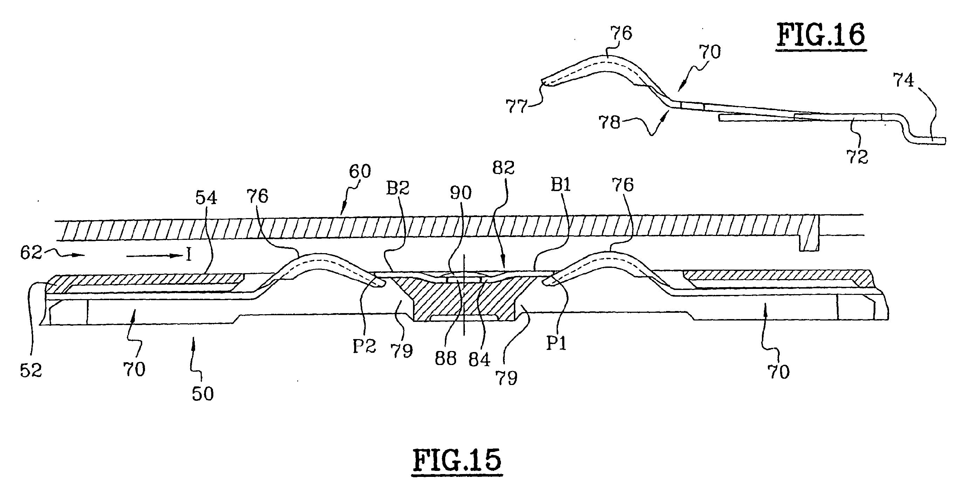

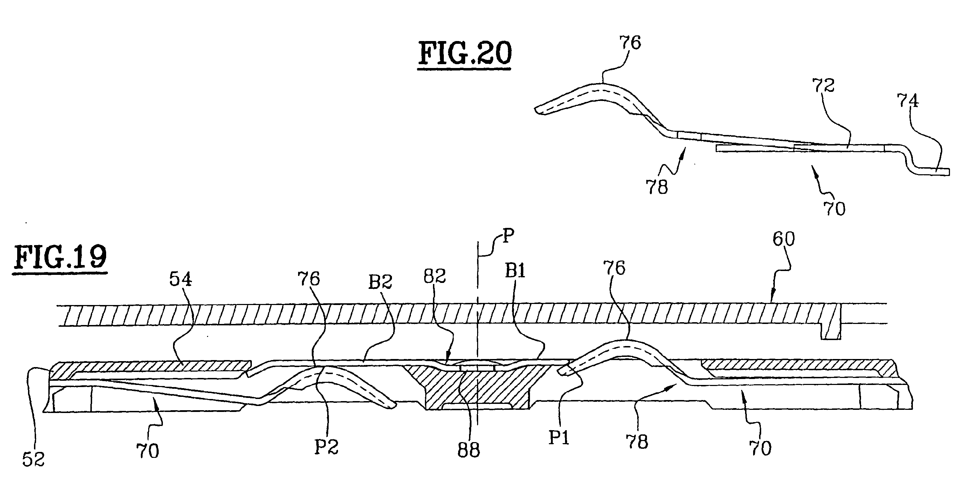

A contact blade 70 is illustrated in detail in Figures 16 and 20.

On each side of its intermediate mounting and fixing part 72, each contact blade 70 has, on the one hand, a free connection end 74 and, on the other hand, a free contact end 76 belonging to a free end part 78 which is able to be elastically deformed, that is to say to bend in the manner of a beam, with respect to the intermediate mounting and fixing part 72.

As may be seen in Figure 1, and according to the teachings of the invention, the connector 50 here has eight contact blades 70 which are longitudinally aligned in pairs with their free contact ends 76 arranged back-to-back on each side of the plane of symmetry P.

In the first example embodiment illustrated in Figures 1 to 3, three pairs of contact blades form conventional signal contact blades, that is to say blades able to engage with contact pads on the card C, while the fourth pair of contact blades, that is to say the pair at the bottom in Figure 1, is used to form a switch 80 for detecting the presence of the card C in the contact or connection position.

However, according to the teachings of the invention, the two associated contact blades for forming the switch 80 are in every aspect identical to the other contact blades both in terms of their shape and structure and in the way in which they are mounted in the insulating support.

In addition to the two conventional-type contact blades 70, the switch 80, which here is of the normally-open type, essentially consists of a switch blade 82 which is made from a cut and folded sheet of conducting material.

As may be seen in Figure 2, the rest position of each contact blade 70, whether this be a signal contact blade or a blade associated with the switch 80, is such that its free domed-shaped contact end 76 - in the form of an upside-down spoon - has its convex side facing upwards and projects vertically above the plane of the upper face 54.

For this purpose, each free end part 78 is pressed elastically into bearing contact, in the example shown, with the end nose 77 of each blade so as to bear against a surface portion formed opposite it in the corresponding edge of the cavity or hole 79 in the insulating support 52 which houses the corresponding free end part 78 and which allows the free contact end 76 to project above the insulating support 52.

In the first example embodiment illustrated in Figures 1 to 3, the switch blade 82 is of longitudinally elongate general shape and has a central plate-shaped fixing portion 84 which is fixed to the upper face 54 of the insulating support 52.

More specifically, this upper face has a recess 55 housing the central fixing portion 84, the latter having a hole 86 through which a positioning and fixing stud 88 passes, this being a stud made of plastic and moulded as one piece with the insulating support 52, the operation of fixing and holding the switch blade 82 in place being accomplished by hot crimping the upper head 90 of the stud 88.

In its rest position illustrated in Figures 1 and 2, that is to say in the absence of a card and so as to form a switch of the normally-open type, the two opposed longitudinal branches B1 and B2 of the switch blade 82 each extend opposite and above the free contact end 76 of the associated blade 70 without being in electrical contact with the latter.

Each of the branches B1 and B2 has a curved profile complementary to that of the contact ends 76, the convex side of each branch B1 and B2 facing upwards.

The branches B1 and B2 project vertically above the plane of the upper face 54 of the insulating support 52 and each branch B1, B2 is able to be elastically deformed downwards, in the manner of a bending beam, in order to come into contact with and bear on the free contact end 76 of the associated contact blade 70.

The domed profile of the ends of the branches B1 and B2 which project vertically above the upper plane of the insulating support 52 is optimized, especially with regard to materials selection, in order to control the friction coefficients, and with regard to the shapes and angles so as to reduce the force necessary for inserting the card, the resultant of the forces applied by a branch to the card thus being such that it tends to incline downwards, without the risk of compressing it longitudinally.

This is because, as may be seen in Figure 3, when the card C is present, the branches B1 and B2 are firstly elastically deformed because of the engagement of the front transverse edge 64 of the card C with these branches B1 and B2 and are then held in the deformed position as they bear elastically against the lower face 68 of the card C.

The deformation of the branches B1 and B2 firstly results in them coming into contact with the free contact ends 76 of the associated blades 70 and then it also makes the latter bend vertically downwards, the engagement between the contact surfaces of these components moreover providing a self-cleaning effect during the switching phase.

In the example illustrated in the figures, the card C firstly causes the branch B2 to bend, in order to establish a first contact point P2 between the branch B2 and the free contact end 76 of the associated contact blade 70, and then a second contact point P1 between the branch B1 and the other contact blade 70.

When the two contact points P1 and P2 are established, the switching circuit is closed, that is to say there is electrical continuity between the free connection ends 74 of the two contact blades 70 used to produce the switch 80 in association with the switch blade 82.

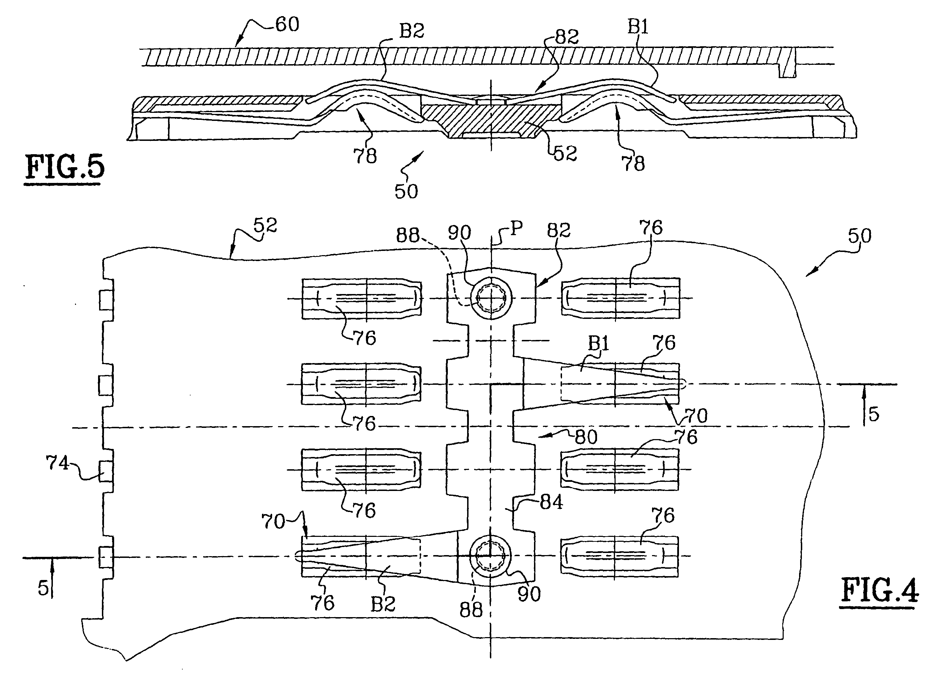

In the variant illustrated in Figure 4, the two branches B1 and B2 of the switch blade 82 are of the same type as those illustrated previously with reference to Figures 1 to 3, but they are not aligned longitudinally, that is to say each of them engages with a free contact end 76 belonging to two contact blades 70 which are not aligned in a pair but each of which lies on one side of the transverse plane of symmetry P.

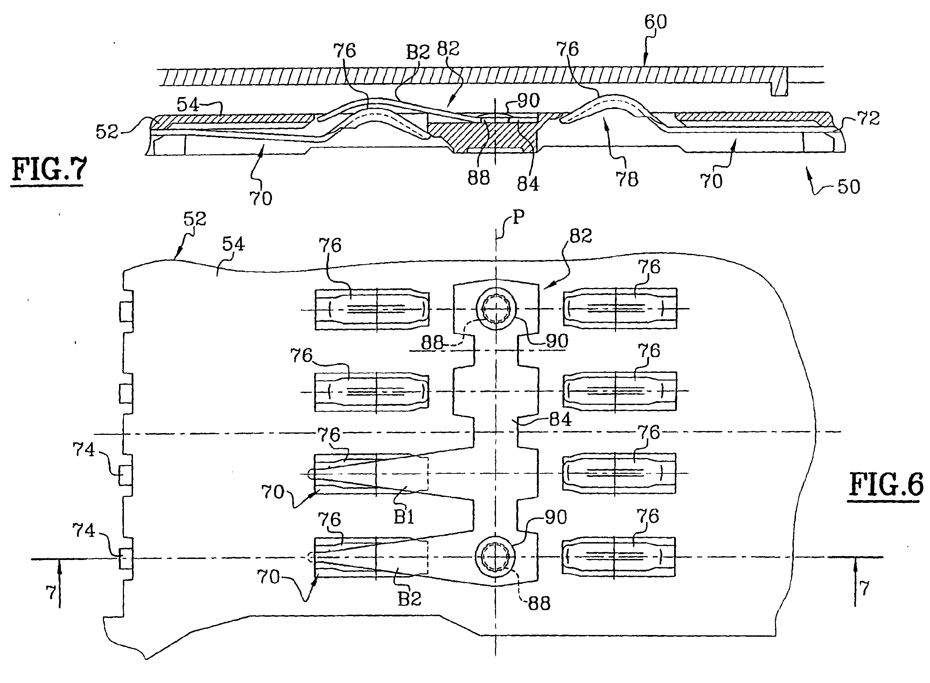

Likewise, in the variant illustrated in Figures 6 and 7, the two branches B2 and B1 engage with free contact ends 76 belonging to contact blades 70 which are not longitudinally aligned in pairs but which here are two transversely adjacent contact blades 70 lying on the same side of the transverse plane of symmetry P. In the variants illustrated in Figures 4 to 7, the switch blade 82 is fixed to the upper face 54 of the insulating support 52 by means of two crimped studs 88 arranged at the opposite transverse ends of the fixing portion 84 of the switch blade 82.

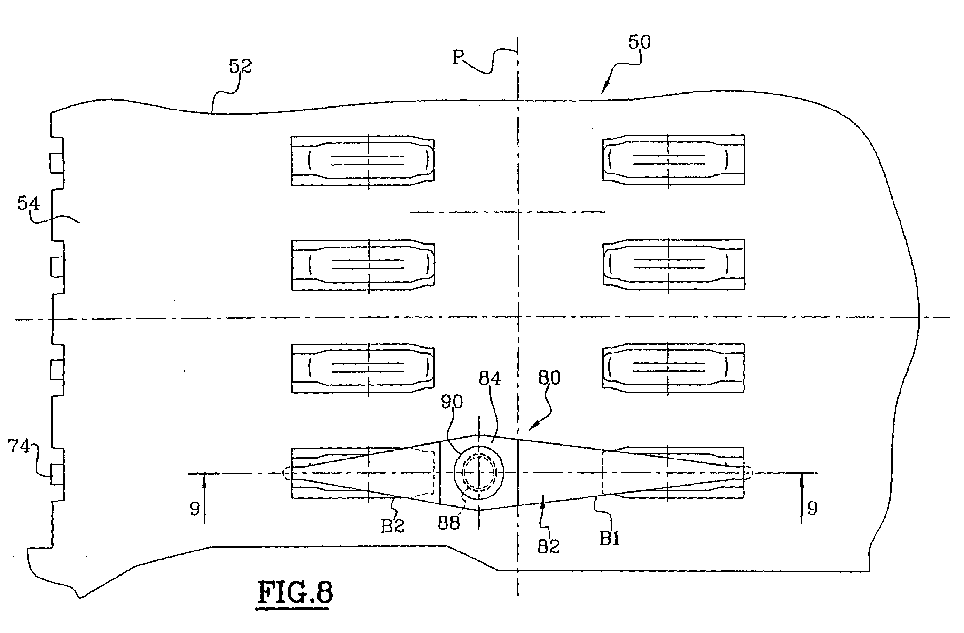

The variant illustrated in Figures 8 to 10 illustrates a connector 50 provided with a switch 80 of the normally-open type which is very similar to the first embodiment illustrated in Figures 1 to 3.

However, this variant differs from the first embodiment in that the design and positioning of the switch blade 82 is unsymmetrical with respect to the transverse plane of symmetry P, that is to say it is generally offset to the left in Figure 8 and its opposed branches B1 and B2 are of different design and have a different function.

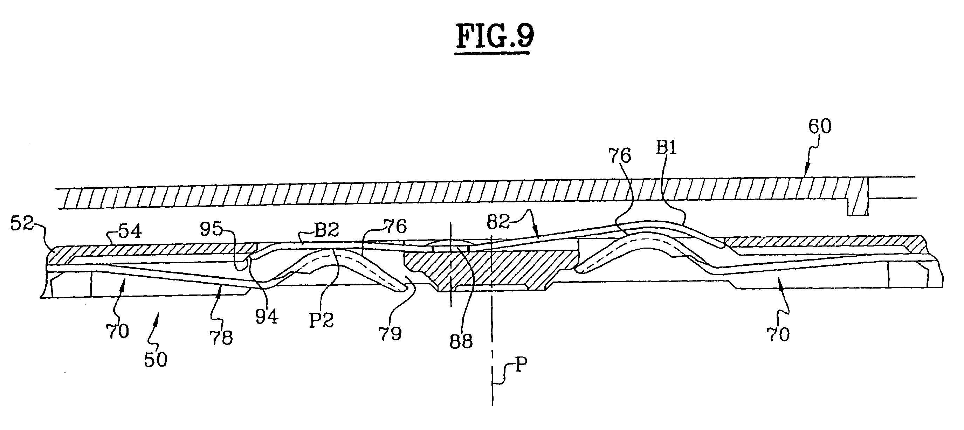

This is because, as may be seen in Figures 8 and 9, the branch B2 is shorter than the branch B1 and is designed always to be in contact with the free contact end 76 of the associated contact blade 70 so that the contact point P2 between these two elements is a permanent contact point.

As may be seen in Figure 9, the longitudinal free end 94 of the branch 82 is locked under a facing part 95 of the edge of the facing cavity 79 and the branch B2 thus always lies below the plane of the upper face 54 of the insulating support 52, the quality of the permanent contact point P2 being good because the free end part 78 is permanently under elastic stress which thus presses the free contact end 76 into elastic bearing contact against the lower face of the branch B2.

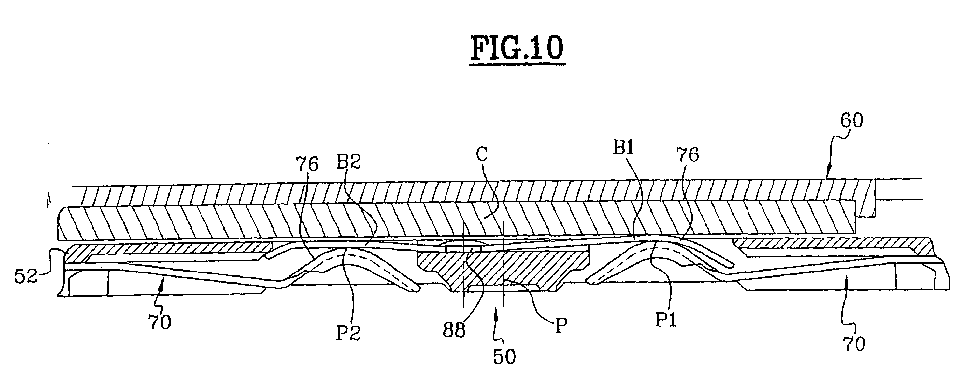

On the other hand the general design of the longer other branch B1 is generally similar to that of the branches B1 mentioned previously, that is to say the elastically deformable branch of the switch blade 82 which, under the action of the card C, and as may be seen in Figure 10, will close the switching circuit by coming into bearing contact against the free contact end 76 of the associated contact blade 70.

The fact of having a longer switching branch B1 makes it possible to increase its bending capability and its bending deflection, thus improving the reliability and the performance of the switching function.

Since the contact point P2 is permanent, it is the making or breaking of the other contact point P1 which determines the closing or opening of the switching circuit.

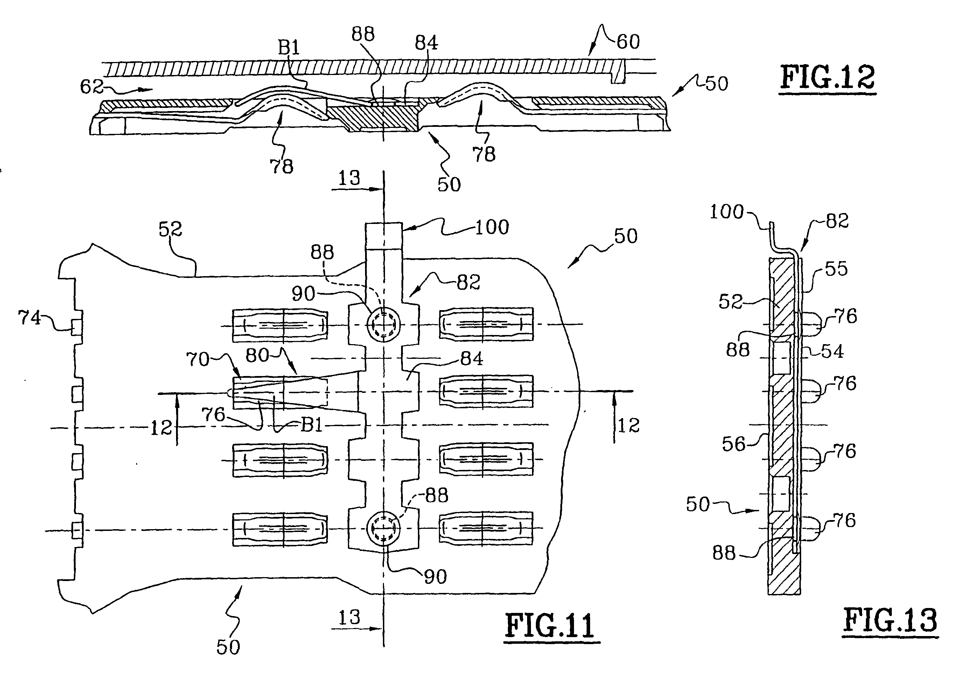

The final variant of a switch of the normally-open type is illustrated in Figures 11 to 13 which show a connector whose switch 80 has only a single switching branch B1 which, therefore, thus engages only with the free contact end 76 of only one of the contact blades 70 carried by the insulating support 52.

This design thus makes it possible to use all the other contact blades 70 for forming signal contact blades each able to engage with one of the seven other contact pads on the chip of the card C.

The single contact pad no longer usable in this embodiment is preferably the standardized contact pad "C6" which is a "non-working" pad on the card C. This pad C6 is illustrated in Figure 25 in the case of a MICROSIM card, a similar arrangement being provided in the case of a large standardized smart card.

In order to complete the switching circuit, the switch blade 82 has a connection output, or terminal, 100 which here is made at one of its transverse ends and which may be connected to a corresponding conducting track (not shown) of the printed-circuit board on which the connector 50 is mounted.

By way of a variant, each of the connection output or terminal may have a connection lead .

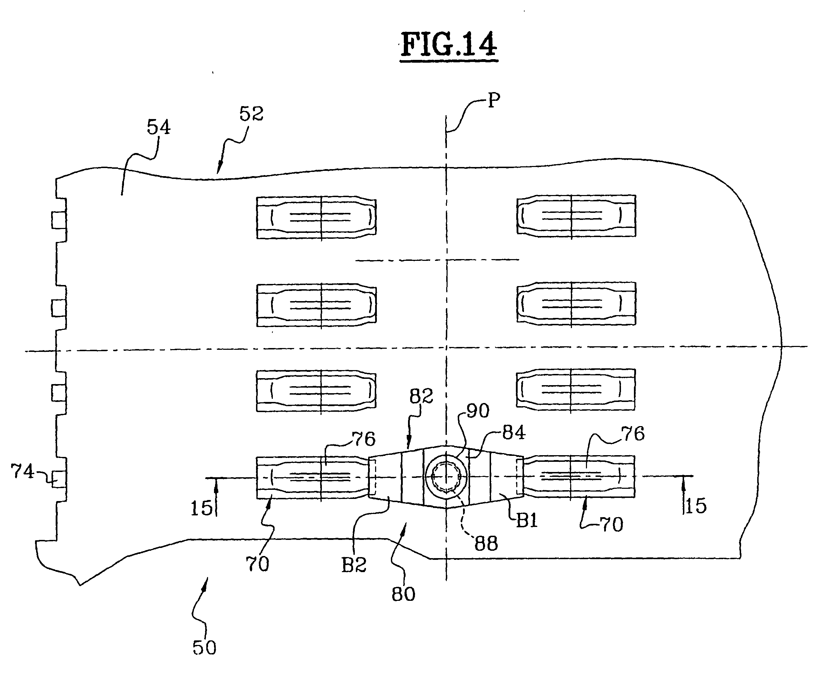

A first example, of a switch of the normally-closed type, that is to say normally closed in the absence of a card C, will now be described with reference to Figures 14 to 17.

The design of the switch 80 illustrated in these figures is generally of the same type as that of the first example embodiment of a normally-open switch illustrated in Figures 1 to 3.

Thus, the switch blade 82 is of symmetrical design and has two longitudinally opposed branches B1 and B2, each of which engages via its free end with the free contact end 76 of an associated contact blade 70.

The two branches B1 and B2 of the switch blade 82 extend substantially in a horizontal plane and they are here both rigid or fixed, that is to say the operation of the switch does not rely on the elastic deformation of one or other of the branches B1 and B2 of the switch blade 82.

This is because, as may be seen in Figure 15, once the insulating support 52 has been mounted, the shape and the position of the switch blade 82 are such that the domed free contact ends 76 of the contact blades 70 associated with the switch blade 82 in order to form the switch 80 are in elastic bearing contact against the opposed free ends of the branches B1 and B2 in order to form two semi-permanent contact points P1 and P2 in the absence of the card C.

When the card C is inserted into the slot 62 in the direction I, its front transverse edge 64 engages, as in the case of signal contact blades 70 not associated with the switch blade 82, with the convex faces of the domed free contact ends 76 in order to cause the free end parts 78 to bend elastically downwards and therefore to open the switching circuit made beforehand between the free connection ends 74 of the two associated contact blades 70 for making the switch 80, i.e. to break the contact points P1 and P2.

In the example illustrated in Figures 15 to 17, it is firstly the contact point P2 which is broken, causing the switching circuit to open, and then it is the other contact point P1 which is broken, thus "confirming" this opening.

When the card is removed, the contact points P1 and P2 are successively re-established in this order, the reestablishment of the latter point of contact P2 again causing the switching circuit to close and indicating the removal of the card C which is no longer in the contact position.

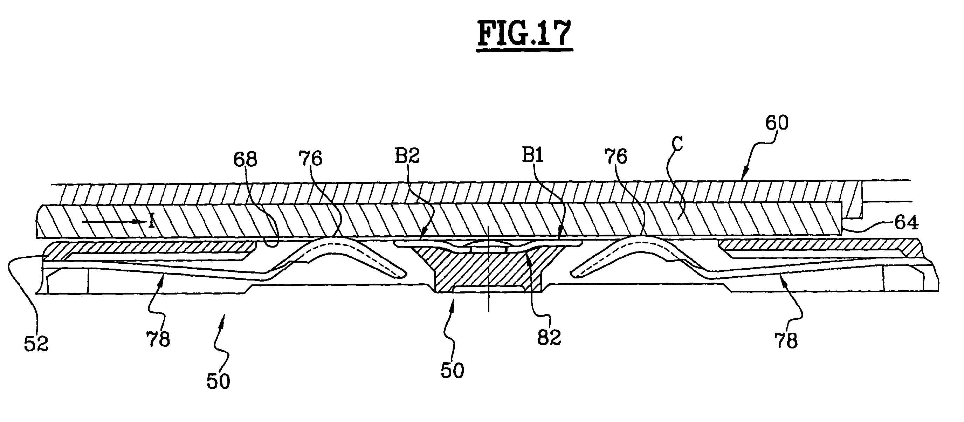

The central fixing portion 84 of the switch blade 82 is arranged so as to be set back vertically downwards with respect to the plane of the upper face 54 of the insulating support and the shape of the branches B1 and B2 makes it possible to guarantee that, in the presence of the card C and as may be seen especially in Figure 17, all of the switch blade 82 is arranged vertically set back from the upper plane 54 of the insulating support 52 so as to prevent any accidental short-circuit between the facing contact pads on the card C and the switch blade 82.

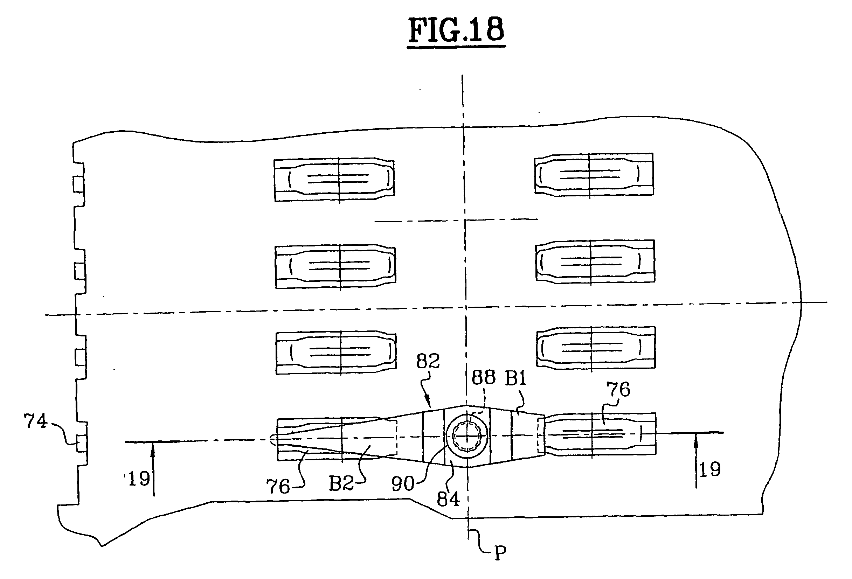

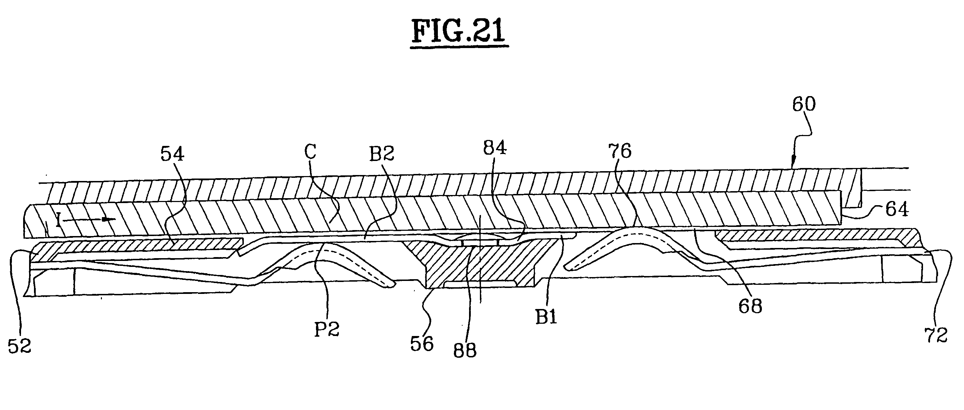

The variant illustrated in Figures 18 to 21 of the first example embodiment of a switch of the normally-closed type illustrated in Figures 15 to 17 is of the same type as the variant illustrated and described beforehand with reference to Figures 8 to 10, that is to say the switch blade 82 is of an unsymmetrical design with respect to the transverse plane of symmetry P. As may be seen in Figures 19 and 21, the longer branch B2 extends longitudinally above the free contact end 76 of the associated contact blade 70 so that the corresponding contact point P2 between these two elements is a permanent contact point in the absence or presence of a card C.

On the other hand, the other branch B1 is of the same size and same design as that described with reference to Figures 15 to 17, that is to say it forms the branch providing the switching function in combination with the free contact end 76 of the associated contact blade 70.

The switching circuit, which is normally closed between the two contact blades 70, that is to say between their two free connection ends 74, is opened by the front transverse edge 64 of the card C engaging with the free contact end 76 of the contact blade 70 associated with the branch B1, this engagement causing the free end part 78 to bend vertically downwards and resulting in the disappearance of the contact point P1.

When the card C is removed, the contact point P1 is re-established and the switching circuit is again closed.

It may be seen that, in this variant, the front transverse edge 64 never engages with the branch 82 which lies in the plane of the upper face 54 of the insulating support 52.

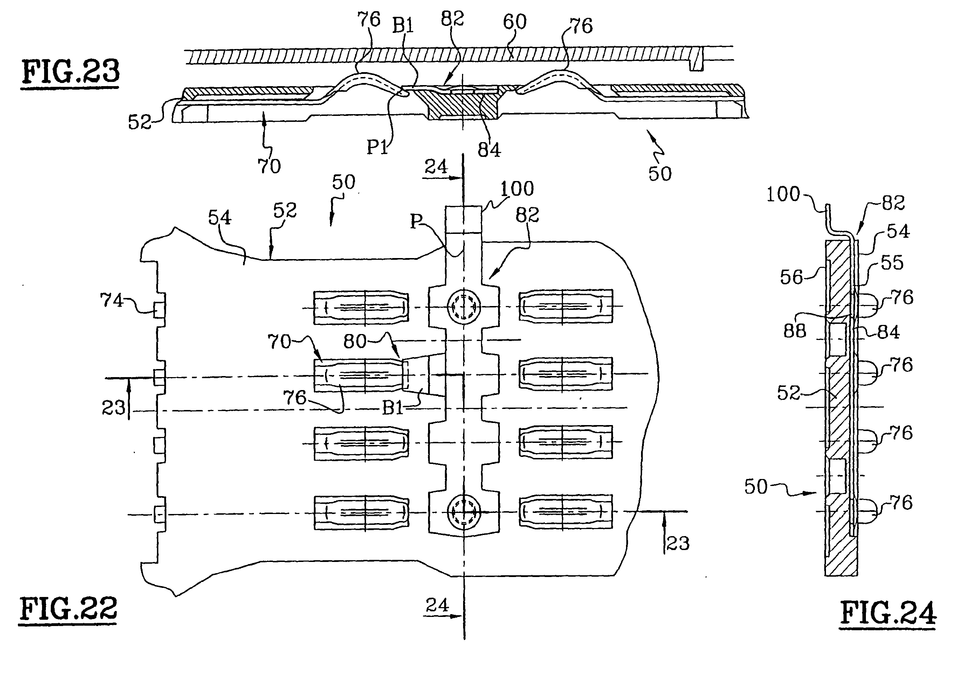

Lastly, the final variant of a normally-closed switch, illustrated in Figures 22 to 24, will now be described.

As in the case of the variant of a switch of the normally-open type illustrated in Figures 11 to 13, this involves producing a switch 80 using a switch blade 82 which engages only with the free contact end 76 of a single contact blade 70 of the connector 50.

As in the case illustrated previously, the switch blade 82 has only a single switching branch B1 for normally, that is to say in the absence of a card, establishing a point of contact P1 with the free contact end 76 of the associated contact blade 70, the switching circuit being open in the presence of a card.

The switching circuit is then open between the free connection end 74 of the associated contact blade 70 and the connection output 100 which is a transverse end of the switch blade 82.

The central branch B1 is only associated with a single signal contact blade 70.

When the switch is opened, by inserting the card C, the associated contact blade 70 for forming the switch 80 may again be used as a signal contact blade insofar as its first use as a blade belonging to the switching circuit is always prior to its use as a signal contact blade, the insertion of the card always causing the switching circuit to open, the reverse sequence also being respected when disengaging or removing the card C.

In this configuration of a switch of the normally-closed type, it is therefore conceivable to produce the switch function for detecting the presence of the card C with an "unavailable" contact blade 70, that is to say with a contact blade normally used for being connected to a functional contact pad on the integrated-circuit board, this use being accomplished with an electronic circuit for compatible use and application, for example for connection to an earth plane.

Apart from the fact that the construction of the switch 80 according to the teachings of the invention makes use of conventional-type contact blades 70 which are all the same as each other, this design also makes it possible to retain the manufacturing process for the connector, especially when the contact blades are fitted by inserting them longitudinally into the insulating support, even if the switch blades have been fitted beforehand into the upper face of the insulating supports, as will be easily understood when considering the figures.

If the contact blades 70 were fitted before the switch blade 82 was fitted, no other operation is required on the contact blades 70 in order to allow the switch blade 82 to be fitted subsequently.

Of course, according to one of the objectives of the invention, the design of the blade-type switch 80 according to the invention can be applied whatever the direction of insertion of the card C with respect to the insulating support 52.

## Claims

1. Electrical connector (50) for connecting a contact-type integrated-circuit card or smart card (C) comprising a plane lower face (68) provided with contact pads,
of the type comprising an insulating support (52) bounded by an approximately plane upper face (54), from above which a series of free contact ends (76) projects vertically, each of which belongs to the free end part (78) of an elastically deformable contact blade (70) carried by the insulating support, each free end part (78) being elastically deformed downwards by the card when the latter is brought into a contact position in which each free contact end (76) bears elastically against a facing portion of the lower face (68) of the card (C), especially against a contact pad,
of the type in which each contact blade (70) has another free end (74) for connection,
and of the type comprising an electrical switch (80) for detecting the presence of a card (C) in the contact position, comprising a switch blade (82) made of conducting material which is fixed to the insulating support (52) and which has at least a first branch (B1) which extends opposite and above an upper portion of a free end part (78) belonging to an elastically deformable blade (70) made of conducting material which is carried by the insulating support (52) and which has a free connection end, the first branch (B1) of the switch blade (82) being able or unable to engage with this portion depending on whether or not a card (C) is present in the contact position in order to make or break, or to break or make, an electrical switching circuit between the free connection end (74) of the blade (70) having the said portion and the switch blade (82),
**characterized in that** the blade (70) having the said portion is identical to the contact blades (70) of the connector (50) and **in that** the said portion is the free contact end (76) of the said blade (70).

2. Connector according to the preceding claim, **characterized in that** the switch blade (82) has a second branch (B2) which extends opposite the free contact end (76) of another contact blade (70) of the connector in order to make or break an electrical switching circuit between the free connection ends (76) of the two contact blades (70) associated with the switch blade (82).

3. Connector according to the preceding claim, **characterized in that** the free contact ends (76) of the contact blades (70) of the connector are longitudinally aligned in pairs.

4. Connector according to the preceding claim, **characterized in that** the free contact ends (76) of the said two associated contact blades (70) belong to a pair of longitudinally aligned ends (76).

5. Connector according to Claim 3, **characterized in that** the free contact ends (76) of the said two associated contact blades (70) do not belong to a pair of longitudinally aligned ends (76).

6. Connector according to any one of Claims 3 to 5, **characterized in that** the second branch (B2) of the switch blade (82) is always in electrical contact with the free contact end (76) of the associated contact blade in order to establish a permanent electrical contact point (P2) between these two elements (B2, 76), while the first branch (B1) of the switch blade is able or unable to engage with the free contact end (76) of the associated contact blade in order to establish or not establish another electrical contact point (P1) between these two elements (B1, 76).

7. Electrical connector according to any one of the preceding claims, **characterized in that** the electrical switching circuit is open in the absence of a card (C) in the contact position and is closed in the presence of a card (C) in the contact position, and **in that** the switch blade (82) has at least one movable branch (B1) which, in the presence of a card (C) in the contact position, is elastically deformed in order to establish an electrical contact point (P1) with the free contact end (76) of the contact blade (70) associated with this branch (B1).

8. Electrical connector according to any one of Claims 1 to 7, **characterized in that** the electrical switching circuit is closed in the absence of a card (C) in the contact position and is open in the presence of a card (C) in the contact position, **in that** the switch blade (82) has at least one fixed branch (B1) against which the free contact end (76) of the associated contact blade (70) bears elastically in the absence of a card (C) in the contact position, in order to establish an electrical contact point (P1) between these two elements, and **in that** the presence of a card (C) in the contact position causes the said free contact end (76) to move vertically downwards in order to take the latter away from the fixed branch (B1) of the switch blade (82).

9. Connector according to any one of the preceding claims, **characterized in that** the switch blade (82) has a fixing portion (84) which is fixed to the upper face (54) of the insulating support (52) of the connector (50).

10. Connector according to the preceding claim, **characterized in that** the switch blade (82) has a plate-shaped fixing portion (84) which bears vertically against a facing portion (55) of the upper face (54) of the insulating support (52) to which insulating support it is fixed by hot crimping an upper head (90) of a fixing and positioning stud (88) which passes through a hole (86) in the fixing portion (84).

11. Connector according to any one of the preceding claims, **characterized in that** each free contact end (76) of a contact blade has an upwardly convex domed profile.

12. Connector according to any one of the preceding claims, **characterized in that** when a card is present in the contact position the entire switch blade lies vertically below the plane of the upper face (54) of the insulating support (52) in order to avoid any risk of a short-circuit between the contact pads on the lower face of the card (C) and parts of the switch blade (82).

## Patentansprüche

1. Elektrischer Steckverbinder (50) zum Steckverbinden eines integrierten Schaltkontaktkartentyps, intelligente Chipkarte oder Smartcard (C) genannt, die eine untere Planfläche (68) aufweist, an der Kontaktleiterplättchen vorgesehen sind;
- des Typs, der einen isolierenden Träger (52) aufweist, der von einer in etwa planen Oberseite (54) begrenzt ist, aus der eine Reihe von freien Kontaktstück-Enden (76) vertikal nach oben hervorstehen, wovon jedes zu einem freien Endstück (78) einer elastisch verformbaren Kontaktzunge (70) gehört, die von dem isolierenden Träger getragen wird, wobei durch die Karte jedes freie Endstück (78) nach unten elastisch verformt wird, wenn diese in eine Kontaktposition gebracht wird, in welcher jedes freie Kontaktstück-Ende (76) gegen einen Flächenabschnitt der unteren Planfläche (68) der Karte (C) elastisch auflagert, und insbesondere gegen ein Kontaktleiterplättchen;
- des Typs, in dem jede Kontaktzunge (70) ein weiteres freies Ende (74) für eine Steckverbindung aufweist;
- und des Typs, der eine elektrische Schaltung (80) für das Erfassen der Anwesenheit einer Karte (C) in der Kontaktposition aufweist, welche einen aus einem leitfähigen Material hergestellten Blattkontaktschalter (82) besitzt, der an dem isolierenden Träger (52) befestigt ist, und der mindestens eine erste Abzweigung (B1) umfasst, die sich gegenüberliegend und über einem oberen Abschnitt des freien Endstücks (78) erstreckt, welches zu einer elastisch verformbaren Kontaktzunge (70) gehört und aus einem leitfähigen Material hergestellt ist, die von dem isolierenden Träger (52) getragen wird, und die ein freies Anschluss-Endstück (74) aufweist, wobei die erste Abzweigung (B1) des Blattkontaktschalters (82) diesen Endbereich kontaktieren oder nicht kontaktieren kann, was davon abhängt, ob eine Karte (C) in der Kontaktposition vorhanden oder nicht vorhanden ist, um **dadurch** einen elektrischen Schaltkreis zwischen dem freien Anschluss-Endstück (74) der Kontaktzunge (70), die den betreffenden Abschnitt aufweist, und dem Blattkontaktschalter (82) herzustellen oder zu unterbrechen, bzw. zu unterbrechen oder herzustellen;
**dadurch gekennzeichnet, dass** die Kontaktzunge (70), die den betreffenden Abschnitt aufweist, mit den Kontaktzungen (70) des Steckverbinders (80) identisch ist, und **dadurch**, dass der erwähnte Abschnitt das freie Kontaktstück-Ende (76) der betreffenden Kontaktzunge (70) ist.

2. Steckverbinder gemäß dem vorhergehenden Anspruch, **dadurch gekennzeichnet, dass** der Blattkontaktschalter (82) eine zweite Abzweigung (B2) besitzt, die sich gegenüberliegend zu dem freien Kontaktstück-Ende (76) von einer weiteren Kontaktzunge (70) des Steckverbinders erstrecken kann, um **dadurch** einen elektrischen Schaltkreis zwischen den freien Kontaktstück-Enden (76) der zwei Kontaktzungen (70) herzustellen oder zu unterbrechen, die mit dem Blattkontaktschalter (82) verbunden sind.

3. Steckverbinder gemäß dem vorhergehenden Anspruch, **dadurch gekennzeichnet, dass** die freien Kontaktstück-Enden (76) von den Kontaktzungen (70) des Steckverbinders paarweise und der Länge nach ausgerichtet sind.

4. Steckverbinder gemäß dem vorhergehenden Anspruch, **dadurch gekennzeichnet, dass** die freien Kontaktstück-Enden (76) von den zwei in Verbindung stehenden Kontaktzungen (70) des Steckverbinders zu einem der Länge nach ausgerichteten Paar der Kontaktstück-Enden (76) gehören.

5. Steckverbinder gemäß Anspruch 3, **dadurch gekennzeichnet, dass** die freien Kontaktstück-Enden (76) von den zwei in Verbindung stehenden Kontaktzungen (70) nicht zu einem der Länge nach ausgerichteten Paar der Kontaktstück-Enden (76) gehören.

6. Steckverbinder gemäß einen der Ansprüche 3 bis 5, **dadurch gekennzeichnet, dass** die zweite Abzweigung (B2) des Blattkontaktschalters (82) stets in einem elektrischen Kontakt mit dem freien Kontaktstück-Ende (76) der zugehörigen Kontaktzunge steht, um **dadurch** einen permanent elektrischen Kontaktpunkt (P2) zwischen den diesbezüglichen beiden Einsatzelementen (B2, 76) zu definieren, während die erste Abzweigung (B1) des Blattkontaktschalters das freie Kontaktstück-Ende (76) der zugehörigen Kontaktzunge kontaktieren oder nicht kontaktieren kann, um einen weiteren elektrischen Kontaktpunkt (P1) zwischen den diesbezüglichen beiden Einsatzelementen (B1, 76) herzustellen oder nicht herzustellen.

7. Elektrischer Steckverbinder gemäß einen der vorhergehenden Ansprüche, **dadurch gekennzeichnet, dass** sich der elektrische Schaltkreis bei Abwesenheit einer Karte (C) in der Kontaktposition in einem Ruhestromkreis befindet, und bei Anwesenheit einer Karte (C) in der Kontaktposition in einem Arbeitsstromkreis ist, und **dadurch gekennzeichnet, dass** der Blattkontaktschalter (82) mindestens eine bewegliche Abzweigung (B1) besitzt, welche bei Anwesenheit von einer Karte (C) in der Kontaktposition elastisch verformt wird, um einen elektrischen Kontaktpunkt (P1) mit dem freien Kontaktstück-Ende (76) der Kontaktzunge (70) zu definieren, welche mit dieser Abzweigung (B1) verbunden ist.

8. Elektrischer Steckverbinder gemäß einen der Ansprüche 1 bis 7, **dadurch gekennzeichnet, dass** sich der elektrische Schaltkreis bei Abwesenheit einer Karte (C) in der Kontaktposition in einem Ruhestromkreis befindet und bei Anwesenheit einer Karte (C) in der Kontaktposition in einem Arbeitsstromkreis ist, **dadurch gekennzeichnet, dass** der Blattkontaktschalter (82) mindestens eine fixierte Abzweigung (B1) besitzt, gegen welche das freie Kontaktstück-Ende (76) der zugehörigen Kontaktzunge (70) bei Abwesenheit einer Karte (C) in der Kontaktposition elastisch auflagert, um einen elektrischen Kontaktpunkt (P1) zwischen diesen zwei Einsatzelementen zu definieren, und **dadurch gekennzeichnet, dass** die Anwesenheit einer Karte (C) in der Kontaktposition bei dem freien Kontaktstück-Ende (76) bewirkt, dass es sich vertikal nach unten bewegt, damit dieses von der fixierten Abzweigung (B1) des Blattkontaktschalters (82) weg gleitet.

9. Steckverbinder gemäß einen der vorhergehenden Ansprüche, **dadurch gekennzeichnet, dass** der Blattkontaktschalter (82) einen Fixierabschnitt (84) aufweist, der auf der planen Oberseite (54) des isolierenden Trägers (52) des Steckverbinders (50) befestigt ist.

10. Steckverbinder gemäß dem vorhergehenden Anspruch, **dadurch gekennzeichnet, dass** der Blattkontaktschalter (82) einen plättchenartigen Fixierabschnitt (84) aufweist, der gegen einen Flächenabschnitt (55) der planen Oberseite (54) des isolierenden Trägers (52) vertikal auflagert, an welchen der isolierende Träger mittels eines Heißcrimpverfahrens eines Kopfrades (90) mit einem Fixier- und Positionierbolzen (88) befestigt ist, der durch eine Bohrung (86) in dem Fixierabschnitt (84) hindurchführt.

11. Steckverbinder gemäß einen der vorhergehenden Ansprüche, **dadurch gekennzeichnet, dass** jedes freie Kontaktstück-Ende (76) von einer Kontaktzunge (70) ein aufwärts konvex gewölbtes Profil aufweist.

12. Steckverbinder gemäß einen der vorhergehenden Ansprüche, **dadurch gekennzeichnet, dass**, wenn sich eine Karte in der Kontaktposition befindet, der ganze Blattkontaktschalter (82) vertikal unterhalb der Ebene der planen Oberseite (54) des isolierenden Trägers (52) liegt, um jegliches Risiko im Hinblick auf einen Kurzschluss zwischen den Kontaktleiterplättchen auf der Unterseite der Karte (C) und den Teilen des Blattkontaktschalters (82) zu verhindern.

## Revendications

1. Connecteur électrique (50) pour le raccordement d'une carte (C) à circuit(s) intégré(s) à contacts comportant une face inférieure plane (68) munie de plages de contact,
du type comportant un support isolant (52) délimité par une face supérieure (54) sensiblement plane au dessus de laquelle font saillie verticalement une série d'extrémités libres de contact (76) dont chacune appartient au tronçon d'extrémité libre (78) d'une lame de contact (70) déformable élastiquement et portée par le support isolant, chaque tronçon d'extrémité libre (78) étant déformé élastiquement vers le bas par la carte lorsque cette dernière est amenée dans une position de contact dans laquelle chaque extrémité libre de contact (76) est en appui élastique contre une portion en vis-à-vis de la face inférieure (68) de la carte (C), notamment contre une plage de contact,
du type dans lequel chaque lame de contact (70) comporte une autre extrémité libre (74) de raccordement,
et du type comportant un commutateur électrique (80) de détection de la présence d'une carte (C) en position de contact comportant une lame de commutateur (82) en matériau conducteur qui est fixée sur le support isolant (52) et qui comporte au moins une première branche (B1) qui s'étend en regard et au dessus d'une portion supérieure d'un tronçon d'extrémité libre (78) appartenant à une lame déformable élastiquement (70) en matériau conducteur qui est portée par le support isolant (52) et qui comporte une extrémité libre de raccordement, la première branche (B1) de la lame de commutateur (82) étant susceptible de coopérer ou non avec cette portion en fonction de la présence ou non d'une carte (C) en position de contact pour établir ou interrompre, ou pour interrompre ou établir, un circuit électrique de commutation entre l'extrémité libre de raccordement (74) de la lame (70) comportant ladite portion et la lame de commutateur (82),
**caractérisé en ce que** la lame (70) comportant ladite portion (76) est identique aux lames de contact (70) du connecteur (50), et **en ce que** ladite portion est l'extrémité de contact (76) de ladite lame (70).

2. Connecteur selon la revendication précédente, **caractérisé en ce que** la lame de commutateur (82) comporte une deuxième branche (B2) qui s'étend en regard de l'extrémité libre de contact (76) d'une autre lame de contact (70) du connecteur pour établir ou interrompre un circuit électrique de commutation entre les extrémités de raccordement (76) des deux lames (70) de contact associées à la lame de commutateur (82).

3. Connecteur selon la revendication précédente, **caractérisé en ce que** les extrémités libres de contact (76) des lames de contact (70) du connecteur sont alignées longitudinalement par paires.

4. Connecteur selon la revendication précédente, **caractérisé en ce que** les extrémités libres de contact (76) desdites deux lames (70) associées de contact appartiennent à une paire d'extrémités alignées longitudinalement (76).

5. Connecteur selon la revendication3, **caractérisé en ce que** les extrémités de contact (76) desdites deux lames (70) associées de contact n'appartiennent pas à une paire d'extrémités alignées longitudinalement.

6. Connecteur selon l'une quelconque des revendications 3 à 5, **caractérisé en ce que** la deuxième branche (B2) de la lame de commutateur (82) est toujours en contact électrique avec l'extrémité libre de contact (76) de la lame de contact associée pour établir un point (P2) de contact électrique permanent entre ces deux éléments (B2, 76) tandis que la première branche (B1) de la lame de commutateur est susceptible ou non de coopérer avec l'extrémité libre de contact (76) de la lame de contact associée pour établir ou non un autre point de contact (P1) électrique entre ces deux éléments (B1, 76).

7. Connecteur électrique selon l'une quelconque des revendications précédentes, **caractérisé en ce que** le circuit électrique de commutation est ouvert en l'absence d'une carte (C) en position de contact et est fermé en présence d'une carte (C) en position de contact, et **en ce que** la lame de commutateur (82) comporte au moins une branche mobile (B1) qui, en présence d'une carte (C) en position de contact, est déformée élastiquement pour établir un point de contact électrique (P1) avec l'extrémité libre de contact (76) de la lame de contact (70) associée à cette branche (B1).

8. Connecteur électrique selon l'une quelconque des revendications 1 à 7, **caractérisé en ce que** le circuit électrique de commutation est fermé en l'absence d'une carte (C) en position de contact, et est ouvert en présence d'une carte (C) en position de contact, et **en ce que** la lame de commutateur (82) comporte au moins une branche fixe (B1) contre laquelle l'extrémité libre de contact (76) de la lame de contact associée (70) est en appui élastique en l'absence d'une carte (C) en position de contact pour établir un point de contact électrique (P1) entre ces deux éléments, et **en ce que** la présence d'une carte (C) en position de contact provoque un déplacement vertical vers le bas de ladite extrémité de contact (76) pour éloigner cette dernière de la branche fixe (B1) de la lame de commutateur (82).

9. Connecteur selon l'une quelconque des revendications précédentes, **caractérisé en ce que** la lame de commutateur (82) comporte une partie de fixation (84) qui est fixée sur la face supérieure (54) du support isolant (52) du connecteur (50).

10. Connecteur selon la revendication précédente, **caractérisé en ce que** la lame de commutateur (82) comporte une partie de fixation (84) en forme de plaque qui est en appui vertical contre une portion en regard (55) de la face supérieure (54) du support isolant (52) sur lequel elle est fixée par sertissage à chaud d'une tête supérieure (90) d'un pion (88) de fixation et de positionnement qui traverse un trou (86) de la partie de fixation (84).

11. Connecteur selon l'une quelconque des revendications précédentes, **caractérisé en ce que** chaque extrémité libre de contact d'une lame de contact a un profil bombé dont la convexité est orientée vers le haut.

12. Connecteur selon l'une quelconque des revendications précédentes, **caractérisé en ce que** en présence d'une carte en position de contact, l'ensemble de la lame de commutateur est agencé verticalement en dessous du plan de la face supérieure (54) du support isolant (52) pour éviter tout risque de court-circuit entre les plages de contact de la face inférieure de la carte (C) et des parties de la lame de commutateur (82).
